# EUROPÄISCHE PATENTSCHRIFT

(11) **EP 1 382 559 B1**
(45) Veröffentlichungstag und Bekanntmachung des Hinweises auf die Patenterteilung: **09.08.2006**
(21) Anmeldenummer: 03010768.4
(22) Anmeldetag: 14.05.2003
(51) Int. Cl.: B66C 1/02

(54) **Manipulationsvorrichtung mit Saugköpfen**
Handling apparatus with suction cups
Dispositif de manipulation à ventouses

(30) Priorität: 19.07.2002 DE 10232819
(43) Veröffentlichungstag der Anmeldung: 21.01.2004
(73) Patentinhaber: VILLEROY & BOCH AG, 66693 Mettlach (DE)
(72) Erfinder: Schneider, Wolfgang, 96515 Sonneberg (DE); Maass, Randolf, 04860 Torgau (DE)
(74) Vertreter: LOUIS, PÖHLAU, LOHRENTZ

(56) Entgegenhaltungen:
- WO-A-00/76899
- DD-A- 203 513
- DD-A- 251 526
- US-A- 1 294 103
- US-A- 3 704 038
- US-A- 3 720 433

## Beschreibung

Die Erfindung betrifft eine Manipulationsvorrichtung gemäß dem Oberbegriff des Anspruches 1 mit mindestens einem an einer Halteeinrichtung vorgesehenen Saugkopf.

Der mindestes eine Saugkopf dient bei einer solchen Manipulationsvorrichtung zum Festsaugen an dem jeweiligen, zu manipulierenden Gegenstand. Handelt es sich bei dem zu manipulierenden Gegenstand um einen stoß- bzw. bruchempfindlichen Gegenstand, so ist bei der Annäherung der Manipulationsvorrichtung an den Gegenstand, d.h. bei Annäherung des mindestens einen Saugkopfes an den Gegenstand, ein Bruch desselben oftmals kaum zu vermeiden.

Aus der US 3 720 433 ist ein Manipulator bekannt, der zum Greifen von auf den Meeresgrund liegenden Gegenständen vorgesehen ist. Dieser bekannte Manipulator weist Greifelemente auf, die jeweils ein nachgiebiges Plattenelement besitzen. Vom jeweiligen Plattenelement stehen vorderseitig Saugköpfe weg, die mit einer Vakuumquelle verbindbar sind. Zu diesem Zwecke weist das jeweilige Plattenelement eine bestimmte Wanddicke auf und ist in seinem Inneren mit Vakuumkanälen ausgebildet, die mit den Saugköpfen verbunden sind. Das jeweilige Plattenelement kann außerdem mit Kanälen ausgebildet sein, die mit einem Überdruck beaufschlagbar sind. Im Inneren jedes Plattenelementes kann außerdem eine Verstärkungseinlage vorhanden sein. Mit einer Membrane hat ein solches Plattenelement keine Gemeinsamkeiten.

Die WO 00/76899 A1 offenbart eine Manipulationsvorrichtung für dünnwandige Flächenelemente wie flexible elektronische Schaltungsplatten. Diese bekannte Manipulationsvorrichtung weist eine flexible Membrane auf, die an einem Rahmen angebracht ist. Die Membrane ist nach außen gewölbt ausgebildet und an ihrem Außenrand mit Vakuumlöchem ausgebildet, die mit einer Vakuumquelle verbindbar sind. In ihrem mittleren Bereich kann die Membrane mit Drucköffhungen ausgebildet sein. Mit Hilfe dieser bekannten Manipulationsvorrichtung ist es möglich, flexible Schaltungsplatten aus einer Lagereinrichtung zu entnehmen und zu einem Arbeitstisch zu übertragen.

Eine Manipulationsvorrichtung der eingangs genannten Art ist aus der DD 251 526 A bekannt. Bei dieser bekannten Manipulationsvorrichtung ist im Saugraum ein Elektromagnet vorgesehen, der zum Anziehen der Membrane dient, um durch die Auswölbung der Membrane auf der entsprechenden Seite der Membrane einen Unterdruck zu erzeugen. Dieser Unterdruck bewirkt an der zugehörigen Ansaugbohrung eine Haltekraft für einen an der Manipulationsvorrichtung festzuhaltenden Gegenstand. Nachdem die Ansaugbohrung jedoch an einer starren, formstabilen Druckscheibe bzw. - platte ausgebildet ist, ist bei der Annäherung dieser bekannten Manipulationsvorrichtung an einen temporär festzuhaltenden und zu manipulierenden, stoß- bzw. bruchempfindlichen Gegenstand ein Bruch des Gegenstandes nicht zuverlässig vermeidbar.

Der Erfindung liegt die Aufgabe zugrunde, eine Manipulationsvorrichtung der eingangs genannten Art zu schaffen, bei welcher ein Bruch des jeweiligen, zu manipulierenden stoß- bzw. bruchempfindlichen Gegenstandes mit einfachen Mitteln verhindert wird.

Diese Aufgabe wird bei einer Manipulationsvorrichtung der eingangs genannten Art erfindungsgemäß durch die Merkmale des Kennzeichenteiles des Anspruchs 1 gelöst.

Dadurch, daß erfindungsgemäß der mindestens eine Saugkopf mit Hilfe der Membrane der Halteeinrichtung während der Annäherung an den jeweiligen zu manipulierenden Gegenstand begrenzt beweglich ist, ergibt sich der Vorteil, daß die Annäherung des mindestens einen Saugkopfes an den zu manipulierenden Gegenstand bis zur Berührung des Gegenstandes weich und stoßfrei erfolgt, so daß ein Bruch stoß- und bruchempfindlicher Gegenstände durch den sich annähernden mindestens einen Saugkopf vermieden wird. Insbesondere bei einer erfindungsgemäßen Manipulationsvorrichtung mit einer Anzahl Saugköpfe zum Festhalten größerflächiger, zu manipulierender, stoß- bzw. bruchempfindlicher Gegenstände, bei denen es sich beispielsweise um rohe Geschirrteile handeln kann, ergibt sich der Vorteil, daß die Saugköpfe weich und stoßfrei am zu manipulierenden Gegenstand zur Anlage bringbar sind, wobei die Membrane bei der Anlage der Saugköpfe an den zu manipulierenden Gegenstand Unebenheiten desselben ausgleicht.

Bei der erfindungsgemäßen Manipulationsvorrichtung können die Saugerplatte und die Membrane eine kreisrunde Außenrandkontur besitzen.

Die Saugerplatte der erfindungsgemäßen Manipulationsvorrichtung kann an einem Adapter befestigbar sein, mittels welchem die erfindungsgemäße Manipulationsvorrichtung an einer zugehörigen Handlingmaschine bzw. -anlage befestigbar ist.

Im Saugraum zwischen der Saugerplatte und dem ersten Klemmteil kann ein vorgespanntes Federelement vorgesehen sein. Das vorgespannte Federelement dient dazu, die Membrane von der Saugerplatte zu beabstanden, wenn der Saugraum nicht mit Vakuum beaufschlagt ist.

Das zweite Klemmteil kann mit einem Plattenelement verbunden sein, von dem eine Anzahl voneinander beabstandete Saugköpfe in die gleiche Richtung wegstehen. Eine derartige Ausbildung der erfindungsgemäßen Manipulationsvorrichtung dient insbesondere zum Ansaugen, Festhalten und Manipulieren relativ großflächiger zu manipulierender und beispielsweise zu bearbeitender Gegenstände.

Die dem Saugraum zugeordnete erste Saugdüseneinrichtung und die dem mindestens einen Saugkopf bzw. den Saugköpfen zugeordnete zweite Saugdüseneinrichtung sind mit einer Vakuumquelle verbunden.

Weitere Einzelheiten, Merkmale und Vorteile ergeben sich aus der nachfolgenden Beschreibung eines in der Zeichnung dargestellten Ausführungsbeispieles der erfindungsgemäßen Manipulationsvorrichtung.

Es zeigen:
- Figur 1: einen Schnitt durch die Manipulationsvorrichtung, und
- Figur 2: eine Ansicht der Manipulationsvorrichtung gemäß Figur 1 in einer Draufsicht.

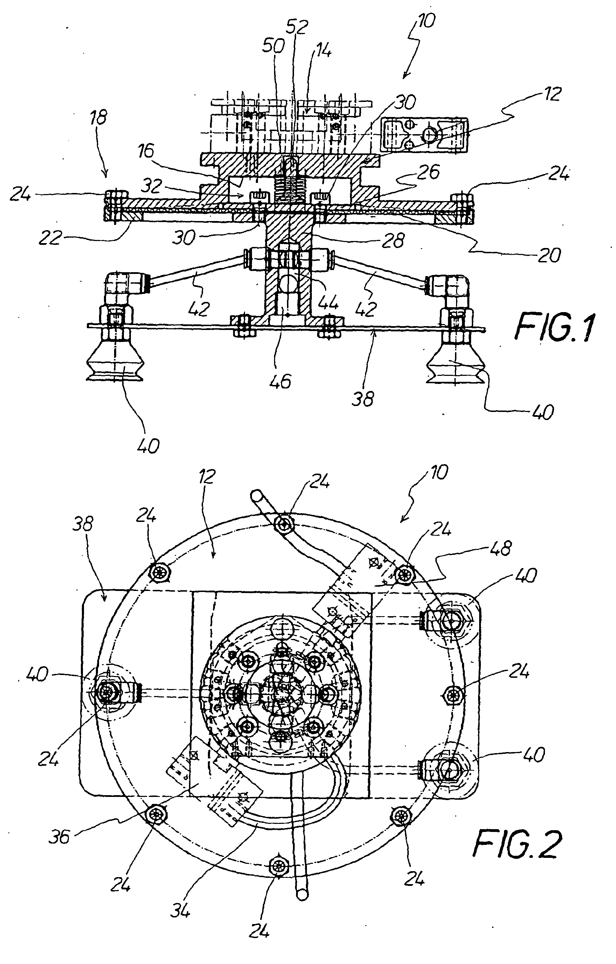

Die Figuren 1 und 2 zeigen eine Ausbildung der Manipulationsvorrichtung 10, die eine Saugerplatte 12 aufweist, die an einem strichliert angedeuteten Adapter 14 befestigbar ist. Die Saugerplatte 12 ist mit einer Vertiefung 16 ausgebildet. Am Umfangsrand 18 der Saugerplatte 12 ist eine Membrane 20 mittels eines Klemmringes 22 abgedichtet festgeklemmt. Hierzu dienen Befestigungsschrauben 24, die in Umfangsrichtung der Saugerplatte 12 an deren Umfangsrand 18 voneinander gleichmäßig beabstandet vorgesehen sind.

Die Membrane 20 ist mit ihrem Zentralbereich zwischen einem ersten Klemmteil 26 und einem zweiten Klemmteil 28 mittels Schrauben 30 eingeklemmt.

Durch die Vertiefung 16 in der Saugerplatte 12 und durch die Membrane 20 ist ein Saugraum 32 definiert, der gegen die Umgebung der Manipulationsvorrichtung 10 abgedichtet ist. Der Saugraum 32 ist mittels einer Rohrleitung 34 mit einer ersten Saugdüseneinrichtung 36 (sh. Figur 2) strömungstechnisch verbunden.

Das zweite Klemmteil 28 ist mit einem Plattenelement 38 fest verbunden, von dem Saugköpfe 40 in die gleiche Richtung wegstehen. Die Saugköpfe 40 sind über Rohrleitungen 42 mit einem Zentralraum 44 im zweiten Klemmteil 28 strömungstechnisch verbunden. Der Zentralraum 44 ist mittels eines Verschlußelementes 46 zur Umgebung hin dicht verschlossen. Der Zentralraum 44 ist mit einer zweiten Saugdüseneinrichtung 48 fluidisch verbunden. Die erste und die zweite Saugdüseneinrichtung 36 und 48 sind mit einer (nicht dargestellten) Vakuumquelle strömungstechnisch verbunden.

Der Adapter 14 ist beispielsweise Teil eines Roboters, der die erste und die zweite Saugdüseneinrichtung 36 und 48 ansteuert.

Im Saugraum 32 ist zwischen der Saugerplatte 12 und dem ersten Klemmteil 26 ein vorgespanntes Federelement 50 vorgesehen. Das Federelement 50 ist durch ein stiftförmiges Zentrierelement 52 positioniert.

### Die Funktionsweise der Manipulationsvorrichtung 10 ist wie folgt:

Die Manipulationsvorrichtung 10 wird beispielsweise mit Hilfe eines (nicht gezeichneten) Roboters an den jeweiligen, zu manipulierenden, insbesondere stoß- bzw. bruchempfindlichen Gegenstand angenähert. Dabei ist während dieser Annäherung der Saugraum 32 mit Vakuum beaufschlagt, so daß das Plattenelement 38 mit den Saugköpfen 40 mit der Saugerplatte 12 eine fest verbundene Einheit bildet. Bei Erreichen eines definierten kleinen Abstandes der Saugköpfe 40 von dem zu manipulierenden Gegenstand wird die erste Saugdüseneinrichtung 36 derartig geschaltet, daß der Saugraum 32 nicht länger mit Vakuum beaufschlagt wird. Das Federelement4 50 kann sich folglich entspannen und das Plattenelement 38 mit den Saugköpfen 40 ist mit Hilfe der Membrane 20 begrenzt frei beweglich. In diesem quasi frei beweglichen Zustand werden die Saugköpfe 40 an den zu manipulierenden Gegenstand angelegt, wobei Unebenheiten des zu manipulierenden Gegenstandes durch die Membrane 20 ausgeglichen werden. Sobald die Saugköpfe 40 an dem zu manipulierenden Gegenstand eng anliegen, wird die zweite Saugdüseneinrichtung 48 derartig geschaltet, daß die Saugköpfe 40 mit Vakuum beaufschlagt werden. Damit wird der zu manipulierende Gegenstand an die Saugköpfe 40 angesaugt, d.h. der zu manipulierende Gegenstrand mit Hilfe der Saugköpfe 40 festgehalten. Anschließend wird die erste Saugdüseneinrichtung 36 wieder derartig geschaltet, daß der Saugraum 32 mit Vakuum beaufschlagt wird. Hierdurch wird die Membrane 20 wieder eng und dicht an die Saugerplatte 12 angesaugt, wobei das erste Klemmteil 26 mit der Saugerplatte 12 form- und kraftschlüssig verbunden wird. Das Plattenelement 38 mit den Saugköpfen 40 bildet dann mit der Saugerplatte 12 wieder eine unbewegliche, d.h. fest verbundene Einheit. Der an der Manipulationsvorrichtung 10 befestigte Gegenstand kann dann mit Hilfe des Roboters z.B. einer Bearbeitungsmaschine zugeführt werden. Hierbei kann es sich beispielsweise um eine Schleifmaschine o. dgl. handeln.

Die Ablage des jeweiligen fertig bearbeiteten Gegenstandes mit Hilfe der Manipulationsvorrichtung 10 kann auf entsprechende Art und Weise durch Steuerung der ersten und zweiten Saugdüseneinrichtung 36 und 48 erfolgen.

### Bezugsziffernliste:

- 10: Manipulationsvorrichtung
- 12: Saugerplatte (von 10)
- 14: Adapter (an 12)
- 16: Vertiefung (in 12)
- 18: Umfangsrand (von 12)
- 20: Membrane (von 10)
- 22: Klemmring (für 20)
- 24: Befestigungsschrauben (für 22)
- 26: erstes Klemmteil (an 20)
- 28: zweites Klemmteil (an 20 für 38)
- 30: Schrauben (zwischen 26 und 28)
- 32: Saugraum (zwischen 16 und 20)
- 34: Rohrleitung (zwischen 32 und 36)
- 36: erste Saugdüseneinrichtung (von 10)
- 38: Plattenelement (an 28 für 40)
- 40: Saugköpfe (von 10)
- 42: Rohrleitungen (zwischen 40 und 44)
- 44: Zentralraum (in 28)
- 46: Verschlußelement (für 44)
- 48: zweite Saugdüseneinrichtung (für 40)
- 50: Federelement (zwischen 12 und 26)
- 52: Zentrierelement (für 50 an 26)

## Patentansprüche

1. Manipulationsvorrichtung mit mindestens einem an einer Halteeinrichtung vorgesehenen Saugkopf (40), wobei die Halteeinrichtung eine Membrane (20) aufweist, die mit ihrem Außenrand an einer einen Saugraum (32) aufweisenden Saugerplatte (12) befestigt ist und die mit ihrem zentralen Bereich zwischen einem ersten und einem zweiten Klemmteil (26 und 28) eingeklemmt ist, wobei das erste Klemmteil (26) der Saugerplatte (12) zugeordnet ist und das zweite Klemmteil (28) mit dem mindestens einen Saugkopf (40) verbunden ist, wobei die Membrane (20) zwischen einer begrenzt beweglichen Näherungsposition und einer Fixierposition verstellbar ist,
**dadurch gekennzeichnet,**
**daß** das zweite Klemmteil (28) mit dem mindestens einen Saugkopf (40) fest verbunden ist, daß der Saugraum (32) zur Verstellung des mindestens einen Saugkopfes (40) mit der Membrane (20) zwischen der begrenzt beweglichen Näherungsposition und der Fixierposition mit einer ersten Saugdüseneinrichtung (36) strömungstechnisch verbunden ist, und daß der mindestens eine Saugkopf (40) mit einer zweiten Saugdüseneinrichtung (48) strömungstechnisch verbunden ist.

2. Manipulationsvorrichtung nach Anspruch 1,
**dadurch gekennzeichnet ,**
**daß** die Saugerplatte (12) an einem Adapter (14) befestigbar ist.

3. Manipulationsvorrichtung nach Anspruch 1,
**dadurch gekennzeichnet ,**
**daß** im Saugraum (32) zwischen der Saugerplatte (12) und dem ersten Klemmteil (26) ein vorgespanntes Federelement (50) vorgesehen ist.

4. Manipulationsvorrichtung nach Anspruch 1,
**dadurch gekennzeichnet ,**
**daß** das zweite Klemmteil (28) mit einem Plattenelement (38) verbunden ist, von dem eine Anzahl voneinander beabstandete Saugköpfe (40) in die gleiche Richtung wegstehen.

5. Manipulationsvorrichtung nach Anspruch 1,
**dadurch gekennzeichnet ,**
**daß** die erste und die zweite Saugdüseneinrichtung (36 und 48) mit einer Vakuumquelle verbunden sind.

## Claims

1. Manipulator with at least one suction head (40), provided on a retaining device, wherein the retaining device has a membrane (20), the outer edge of which is secured on a suction plate (12) having a suction zone (32) and is fixed at the centre between a first and a second clamp (26 and 28), the first clamp (26) being allocated to the suction plate (12) and the second clamp (28) being connected to the at least one suction head (40), wherein the membrane (20) can be adjusted between a movement-limited ready position and a fixing position, **characterized in that** the second clamp (28) is rigidly connected to the at least one suction head (40), **in that** the suction zone (32), for adjustment of the at least one suction head (40) with the membrane (20) between the movement-limited ready position and the fixing position, is fluidically linked to a first suction nozzle device (36) and **in that** the at least one suction head (40) is fluidically linked to a second suction nozzle device (48).

2. Manipulator according to Claim 1, **characterized in that** the suction plate (12) can be mounted on an adapter (14).

3. Manipulator according to Claim 1, **characterized in that** a pre-tensioned spring element (50) is provided in the suction zone (32) between the suction plate (12) and the first clamp (26).

4. Manipulator according to Claim 1, **characterized in that** the second clamp (28) is connected to a plate element (38), from which a number of suction heads (40) stand away at a distance from one another in the same direction.

5. Manipulator according to Claim 1, **characterized in that** the first and the second suction nozzle device (36 and 48) are connected to a vacuum source.

## Revendications

1. Dispositif de manipulation, du type comportant au moins une tête d'aspiration (40) prévue sur un système de prise, le système de prise présentant une membrane (20) qui est fixée par son bord extérieur à un plateau d'aspiration (12) présentant un espace aspirant (32) et qui est, par sa région centrale, pincée entre un premier et un second élément de pincement (26, 28), le premier élément de pincement (26) étant monté sur le plateau d'aspiration (12), et le second élément de pincement (28) étant réuni à au moins une tête d'aspiration (40), la membrane (20) étant réglable entre une position d'approche mobile limitée et une position fixe,
**caractérisé en ce que**
le second élément de pincement (28) est solidaire d'au moins une tête d'aspiration (40), **en ce que** l'espace aspirant (32), en vue du réglage par rapport à la membrane (20) de ladite tête d'aspiration (40) entre la position d'approche mobile limitée et la position fixe, est en liaison fluidique avec un premier système de buse d'aspiration (36) et **en ce que** ladite tête d'aspiration (40) est en liaison fluidique avec un second système de buse d'aspiration (48).

2. Dispositif de manipulation selon la revendication 1, **caractérisé en ce que** le plateau d'aspiration (12) peut être fixé à un adaptateur (14).

3. Dispositif de manipulation selon la revendication 1, **caractérisé en ce que**, dans l'espace aspirant (32), entre le plateau d'aspiration (12) et le premier élément de pincement (26), est prévu un élément élastique pré-tendu (50).

4. Dispositif de manipulation selon la revendication 1, **caractérisé en ce que** le second élément de pincement (28) est relié à un élément en forme de plaque (38) duquel partent une pluralité de têtes d'aspiration espacées le unes des autres.

5. Dispositif de manipulation selon la revendication 1, **caractérisé en ce que** le premier et le second systèmes de buses d'aspiration (36 et 48) sont reliés à une source de vide.
